# EUROPEAN PATENT APPLICATION

(11) **EP 1 818 154 A1**
(43) Date of publication of application: **15.08.2007**
(21) Application number: 07102284.2
(22) Date of filing: 13.02.2007
(51) Int. Cl.: B29C 45/14, B65D 25/36, B65D 23/08

(54) **Plastic product with label, and label intended for this purpose**

(30) Priority: 13.02.2006 NL 1031133
(71) Applicant: T.B.H. Special Products B.V., 7554 NS Hengelo (NL)
(72) Inventor: Ter Beek, Willem, 7555WB Hengelo (NL); Ter Beek, Albertus, 7522PE Enschede (NL); Lassche, Gerrit-Jan Evert, 7511 RV Enschede (NL)
(74) Representative: Schumann, Bernard Herman Johan

(57) **Abstract**

The invention relates to a plastic product, for instance a container such as a receptacle, a cup, a box, a bottle or a tube or a component forming part thereof, such as a cap or a cover, to the outer side of which product a label (4) is adhered, this label (4) comprising a plastic foil (5) to which a printing (6) is applied, wherein the foil (5) is translucent, the printing (6) is applied in mirror image to the foil (5) and the printing (6) is situated on the side remote from the outer side of the foil (5) and is received between the peripheral wall (3) and the foil (5).
In order to make the adhesion between the foil and the plastic product as good as possible, the product according to the invention has the special feature that the side provided with printing is locally free of printing.

## Description

The invention relates to a plastic product, for instance a container such as a receptacle, a cup, a box, a bottle or a tube or a component forming part thereof, such as a cap or a cover, to the outer side of which product a label is adhered, this label comprising a plastic foil to which a printing is applied, wherein the foil is translucent, the printing is applied in mirror image to the foil and the printing is situated on the side remote from the outer side of the foil and is received between the peripheral wall and the foil.

Such a plastic product is for instance known from EP-A-0 534 185, DE-A-32 46 557, US-A-3 324 508, US-A-2003/099 793, US-A-2004/258 934, US-A-3 760 968, US-A-2004/068 901 and BE-A-1 102 601.

In order to make the adhesion between the foil and the plastic product as good as possible, the product according to the invention has the special feature that the side provided with printing is locally free of printing. Because no printing is present between the foil and the wall locally in the zones free of printing, the adhesion can be better controlled here and be qualitatively better since adhesion via a printing generally leaves something to be desired.

The container according to the invention preferably has the special feature that at least a part of the peripheral edge zone of the foil is free of printing.

According to an aspect of the invention, the product has the special feature that the foil is adhered to the product via an adhesive layer.

In a specific embodiment the product according to the invention has the special feature that the foil is adhered to the product via a regular pattern of adhesion zones. An adhesion can hereby be realized which does not effectively differ from a continuous adhesion, i.e. an adhesion over the whole contact surface.

According to a specific embodiment, the product can have the special feature that the foil is transparent.

According to yet another aspect of the invention, the product has the special feature that the product has a light colour, for instance white or cream white. When the printing is applied it is possible here to dispense with the printing run normally necessary for the colour white or a colour close thereto. Dispensing with a printing run results in an economic advantage. It is further found that the image quality of the printing realized with this embodiment displays a high degree of definition and brightness.

The invention provides the further option of the outer surface of the foil being glossy, preferably having a high gloss. This is a very desirable aspect, since plastic products with such a foil make a qualitatively superior impression.

According to a subsequent aspect of the invention, the product has the special feature that the product is a container, and
(a) either the container provided with a label is filled with heated foodstuff and is finally cooled,
(b) or the container provided with a label is filled with non-heated foodstuff and the filled container is then subjected to a thermal treatment, in particular pasteurization (about 80°C) or sterilization (about 120°C), and finally cooled; and
wherein the adhesive layer is of a type, for instance a suitable hot melt, which can withstand this thermal treatment.

According to yet another aspect of the invention, the product has the special feature that the label is adhered to the product by a sealing process.

According to yet another aspect of the invention, the product has the special feature that the label is adhered thereto by in-mould labelling during manufacture of the product by injection moulding.

In order to embody the product in accordance with the two above stated aspects, the embodiment is recommended in which the foil and the product consist of compatible plastics.

The product can particularly have the special feature that the plastics are the same.

If desired, the foil can be coloured. A coloured translucent or even transparent foil can also contribute toward an aesthetically attractive appearance of the product.

The invention further relates to a label intended and adapted for adhesion to a plastic container according to any of the foregoing specifications, which label comprises a plastic foil to which a printing is applied, which foil is locally free of printing.

In an older, known container the printing is applied to the outer side of the foil and the printing is covered by a lacquer layer. When such a container is filled with warm foodstuff or filled with cold foodstuff which, prior to closing of the container with a closing member such as a cover, a sealing foil or the like, is heated in an autoclave for a pasteurizing process (at about 80°C) or a sterilizing process (at about 120°C), it is not possible in the case of the known container to prevent the lacquer layer lying closely against the printing from suffering immediately recognizable external mechanical damage due to thermal expansion and contraction. The lacquer layer is seriously damaged and often loses its integrity. The underlying printing is thereby exposed directly to the action of oxygen from the air at an increased temperature. The basic quality of the printing is hereby also adversely affected. Due to these phenomena the appearance of the known container leaves something to be desired.

A further drawback of the known construction of a container with label is that during said increase in the temperature of the container the lacquer and the printing have a tendency to decompose. As a result unpleasant smelling gases are released during said temperature increase which cause an extremely unpleasant atmosphere in the processing area. In respect of legal regulations these gases may not be automatically exhausted to the outside.

A further drawback of the known construction is that the printing can be damaged during transport, handling and nested stacking of the container.

The invention will now be further elucidated with reference to the accompanying drawings. In the drawings:
Figure 1 shows a cross-section through a container;
Figure 2 shows the detail II of figure 1;
Figure 3 shows a cross-section in accordance with detail IV of figure 1, in which the prior art is shown schematically;
Figure 4 shows the detail IV according to the invention;
Figure 5 shows a view of a label according to the invention from the outside;
Figure 6 shows a view of the label according to figure 5 from the inside; and
Figure 7 is a view corresponding with figure 6 of a variant;
Figure 8 is a perspective view of a container in upside-down position with a label according to the invention;
Figure 9 shows in the form of a blank the label applied with the container of figure 8;
Figure 10 shows a cover for use in combination with the container according to figure 8; and
Figure 11 shows the label as applied in the cover according to figure 10.

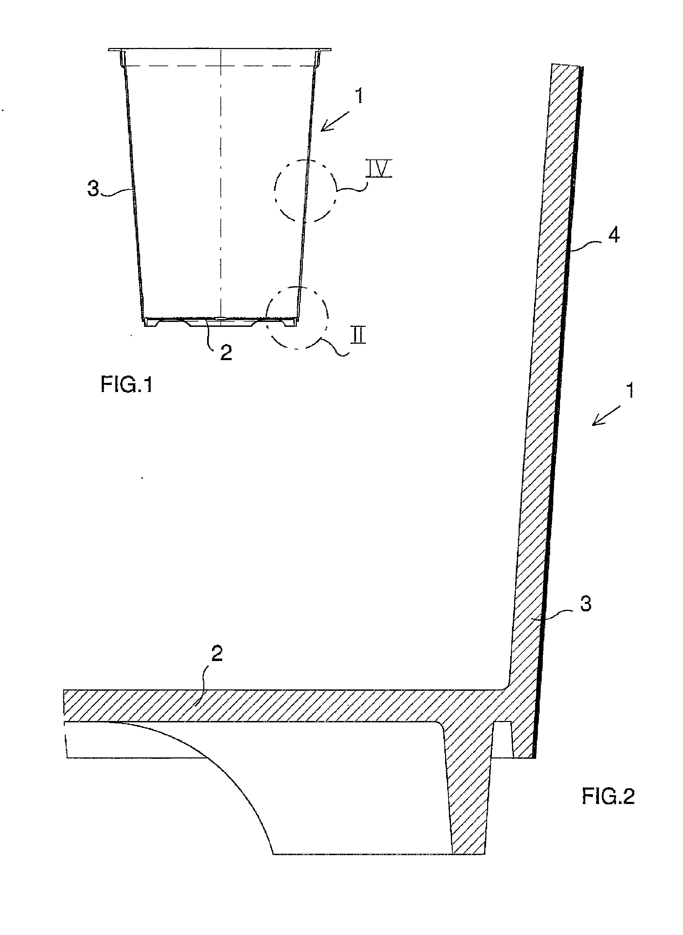

Figure 1 shows a container 1 with a bottom 2 to which connects a standing wall having at least roughly the form of a truncated cone.

Figure 2 shows the detail II on enlarged scale. The container, which is manufactured from opaque polypropylene, bears a label 4 on an outer surface of the standing peripheral wall 3.

This label is adhered to standing wall 3 by in-mould labelling during injection moulding of the container.

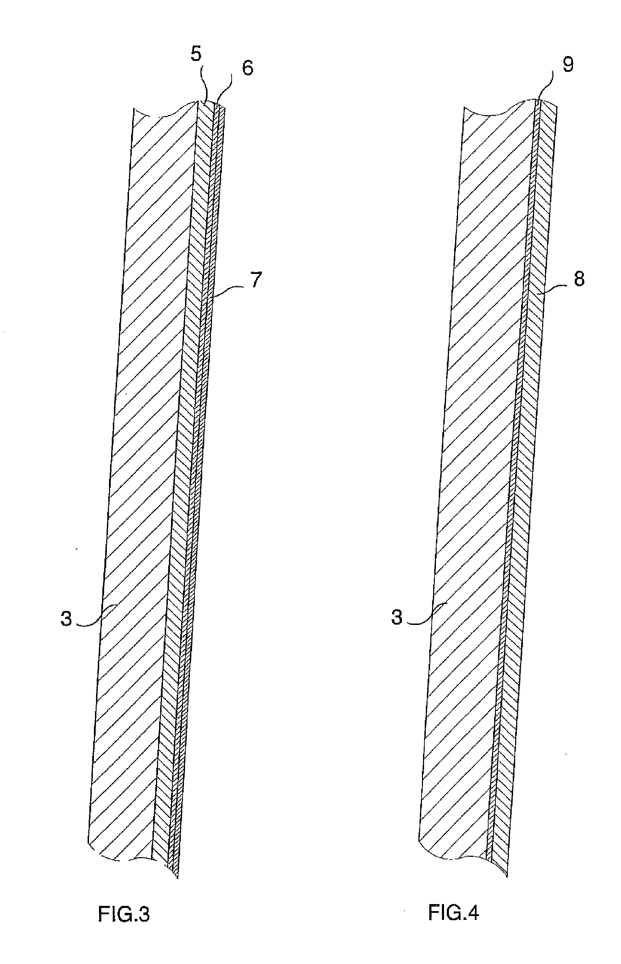

Figure 3 shows an example of the prior art. Here the foil 5 of the label is adhered directly to standing wall 3. The printing 6, which is covered by a lacquer layer 7, is situated on the outer side of foil 5.

Figure 4 shows that according to the invention a transparent foil 8 is adhered to standing wall 3 via a fine pattern of adhesion zones and encloses the printing 9.

A comparison of figures 3 and 4 will make it apparent that in the case of the prior art the printing 6 together with lacquer layer 7 are arranged in relatively vulnerable manner, i.e. on the outside, while in the structure according to the invention as shown in figure 4, printing 9 is embedded in wholly protected manner between standing wall 3 and transparent foil 8.

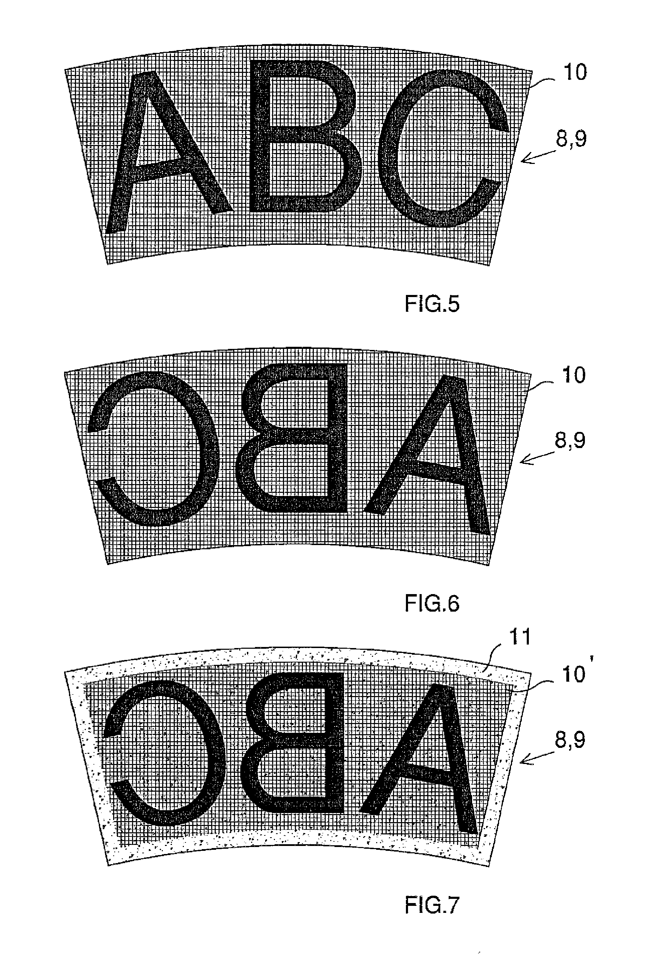

Figure 5 shows label 8, 9 in the form of a blank from the side which, after arranging of label 8, 9 on wall 3, is the outer side.

Figure 6 shows the inner side of label 8, 9. A comparison with figure 5 will immediately show that, logically, the informative printing ABC shown in figure 5 is printed in mirror image.

The crosshatching 10 also forms part of the printing. Figure 6 thus shows clearly that the inner surface of foil 8 is provided with printing and a pattern of adhesion zones.

In the embodiment according to figure 7, the printing designated with 10', including the information ABC, is not applied to the whole surface. In this embodiment a peripheral edge 11 of foil 8 is kept free of printing. This edge 11 hereby also adheres directly to wall 3, this enhancing the reliability of the adhesion.

It is noted that figures 3 and 4 are not drawn to scale. The differences in the thicknesses of wall 3 and the layers of label 5, 6, 7; 8, 9 are too great for this purpose.

It is noted in respect of figure 7 that the peripheral edge 11 free of printing can have a relatively small width. The material of foil 8 is after all fused by in-mould labelling with the material of wall 3 plasticized by heating during injection moulding thereof. The join between the label 8, 9 and wall 3 as according to figure 7 is hereby exceptionally strong and there need be no fear whatsoever of release under any practical conditions.

Keeping at least one of the short straight end edges of a label free of printing could also be envisaged. The label can then have a correspondingly increased length, whereby the straight end zones overlap each other over a certain distance. During the in-mould labelling the end edges of the label fuse together. It will be apparent that it is recommended in this case to have the overlap and the associated fusing take place on the non-printed side of foil 8.

It is noted that a label can also be adhered to a container in a manner other than that described thus far, and in the case of label 8, 9 according to figures 5 and 6 can for instance be adhered to the outer wall of container 1 by means of a hot-melt.

Label 8, 9 according to figure 7 could, if desired, also be adhered to container 1 by means of a sealing process over at least the peripheral edge zone 11.

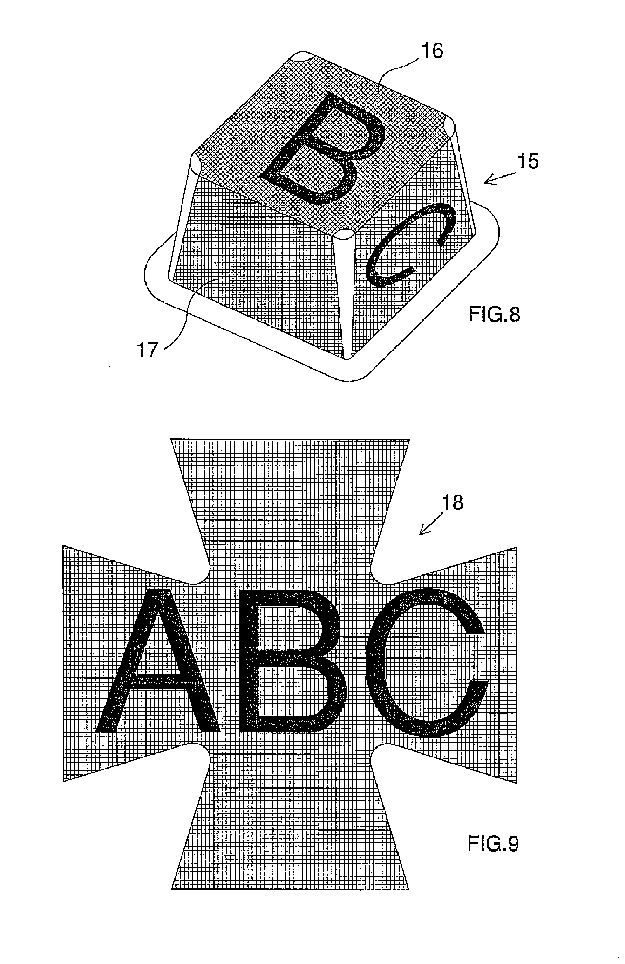

Figure 8 shows a plastic receptacle 15 with a bottom 16 and a standing peripheral wall 17 consisting of four parts. Receptacle 15 is formed as one monolithic unit by injection moulding. An integral label 18 is adhered to bottom 16 and the four parts of the standing peripheral wall 17. This label is shown as a blank in figure 9 from the visual side. The label can be fixed to plastic container 15 in the above described manner, for instance by in-mould labelling, or by out-mould labelling, such as using a hot-melt, a sealing process or other suitable manner of adhesion.

A symbolic informative text ABC is shown. This text can relate to product information, information about the batch of foodstuffs, name and address of the supplier of the end-product, a barcode and the like. According to the invention the whole of the printing, including the informative text ABC, must be situated under all conditions on the inner side of the carrier foil of label 18, so between this carrier foil and the outer surface of container 15.

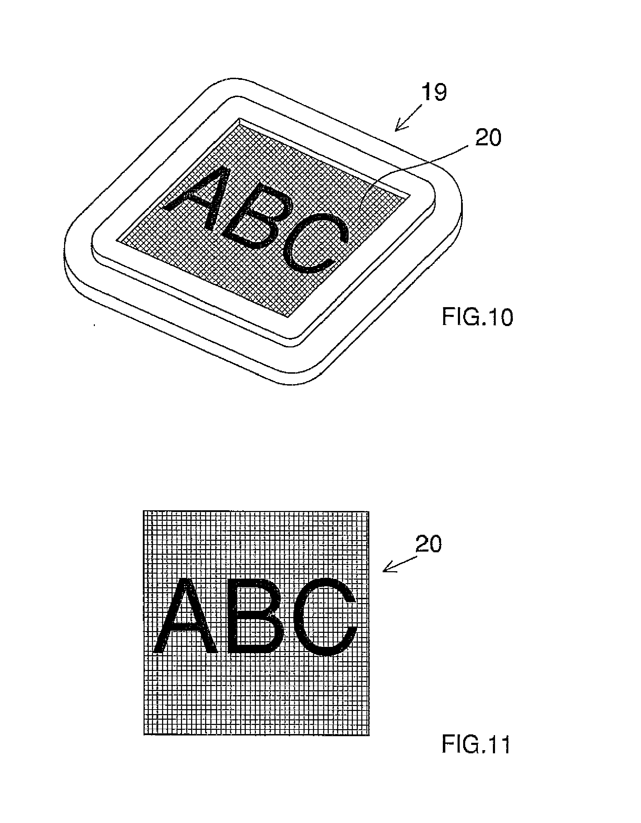

Figure 10 shows a cover 19 with a label 20 provided with a printing with information ABC. The same technical comment as given for container 15 with label 18 according to figures 8 and 9 applies for cover 19 with label 20 as according to figures 10 and 11.

Diverse variants are possible within the scope of the invention.

## Claims

1. Plastic product, for instance a container such as a receptacle, a cup, a box, a bottle or a tube or a component forming part thereof, such as a cap or a cover, to the outer side of which product a label is adhered, this label comprising a plastic foil to which a printing is applied, wherein the foil is translucent, the printing is applied in mirror image to the foil and the printing is situated on the side remote from the outer side of the foil and is received between the peripheral wall and the foil,
**characterized in that**
the side provided with printing is locally free of printing.

2. Plastic product as claimed in claim 1, wherein at least a part of the peripheral edge zone of the foil is free of printing.

3. Plastic product as claimed in claim 1, wherein the foil is adhered to the product via an adhesive layer.

4. Plastic product as claimed in claim 3, wherein the foil is adhered to the product via a regular pattern of adhesion zones.

5. Plastic product as claimed in claim 1, wherein the foil is transparent.

6. Plastic product as claimed in claim 1, wherein the product has a light colour, for instance white or cream white.

7. Plastic product as claimed in claim 1, wherein the outer surface of the foil is glossy, preferably having a high gloss.

8. Plastic product as claimed in claim 1, wherein the product is a container, and
(a) either the container provided with a label is filled with heated foodstuff and is finally cooled,
(b) or the container provided with a label is filled with non-heated foodstuff and the filled container is then subjected to a thermal treatment, in particular pasteurization (about 80°C) or sterilization (about 120°C), and finally cooled; and
wherein the adhesive layer is of a type, for instance a suitable hot melt, which can withstand this thermal treatment.

9. Plastic product as claimed in claim 1, wherein the label is adhered to the product by a sealing process.

10. Plastic product as claimed in claim 1, wherein the label is adhered thereto by in-mould labelling during manufacture of the product by injection moulding.

11. Plastic product as claimed in claim 9 or 10, wherein the foil and the product consist of compatible plastics.

12. Plastic product as claimed in claim 11, wherein the plastics are the same.

13. Plastic product as claimed in claim 1, wherein the foil is coloured.

14. Label intended and adapted for adhesion to a plastic container as claimed in any of the foregoing claims, which label comprises a plastic foil to which a printing is applied, which foil is locally free of printing.
